(19) **Europäisches Patentamt**
**European Patent Office**
**Office européen des brevets**

(11) **EP 2 444 191 B1**

(12) **EUROPEAN PATENT SPECIFICATION**

(45) Date of publication and mention
of the grant of the patent:
**30.09.2020 Bulletin 2020/40**

(51) Int Cl.:
***B23K 9/095*** *(2006.01)*     ***B23K 9/10*** *(2006.01)*
***B23K 9/173*** *(2006.01)*

(21) Application number: **11186063.1**

(22) Date of filing: **21.10.2011**

(54) **Welding power supply with DC reactor having two inductance conditions**

Schweißstromgenerator mit einem zwei unterschiedliche Induktanzkonditionen aufweisenden DC-Generator

Alimentation électrique pour le soudage avec un générateur CC ayant deux conditions d'inductance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 JP 2010238810**

(43) Date of publication of application:
**25.04.2012 Bulletin 2012/17**

(73) Proprietor: **Daihen Corporation**
**Osaka-shi**
**Osaka 532-0027 (JP)**

(72) Inventors:
 • **Hata, Satoru**
  **Osaka 532-0027 (JP)**
 • **Kato, Toshihiko**
  **Osaka 532-0027 (JP)**
 • **Era, Tetsuo**
  **Osaka 532-0027 (JP)**

(74) Representative: **Patentanwälte Bals & Vogel**
**Sendlinger Strasse 42A**
**80331 München (DE)**

(56) References cited:
**JP-A- 2006 043 764     JP-B2- 3 696 907**
**US-B1- 6 359 258     US-B1- 6 710 297**

**Description**

The present invention relates to a welding power supply that performs feedback control based on a voltage detected at a tip of an electrode (see f.e. JPH08103868)

In US 6 710 297 B1, a method of detecting a welding process voltage is described, whereby the welding voltage between a welding torch and a workpiece is detected. The welding process voltage is calculated in real time taking account of the interference variables of a welding system, in particular an inductance and a resistance.

In JP 2006 043 764 A, a consumable electrode arc welding source is described. A saturable reactor is provided with an auxiliary winding and the auxiliary winding is connected with an auxiliary source. At the time when an arc is started, an electric current is supplied from the auxiliary source to the auxiliary winding. Thus the saturable reactor is brought into a saturated state. When a consumable electrode is brought into contact with a base metal, a hot start current with a high current value is supplied from the source main circuit to the consumable electrode through the main winding.

Japanese Examined Patent Publication No. 8-103868 describes a welding power supply device for use with an arc welder. The welding power supply device rectifies AC power, which is received from a commercial power supply, to DC power. The welding power supply device includes an inverter circuit, which converts the DC power into high frequency AC power, a welding transformer, which adjusts the voltage of the high frequency AC power, and a rectification circuit and DC reactor, which convert the high frequency AC power into DC output power that is suitable for arc welding. The output power generated by the power supply device is provided to an electrode, which is supported on a torch. This produces an electric arc between the tip of an electrode and a welding subject.

Such a welding power supply detects the output current and the output voltage. A controller feeds back the presently detected output current and output voltage to the inverter circuit for PWM control. In this manner, the controller controls the output power at a value suitable for the present situation. This improves the welding performance.

To produce a desirable arc, in addition to reflecting the output voltage detected in the power supply on a control value of the inverter circuit, it is preferable that the electrode tip voltage be detected at the very moment the arc is produced and that the detected voltage also be reflected on the control value.

When in use, the torch (electrode), which performs welding, is normally separated from the power supply. A power cable connects the torch and the power supply. Each user uses the torch with the power cable extended at a different length. When the length of the power cable changes, the resistance of the cable changes accordingly. The laid out state of the cable also changes the inductance of the cable. For example, the unused part of the cable may be wound into a number of windings. In such a case, the induction would differ depending on the number of windings. The induction would also differ from that when the cable is laid out straight. Accordingly, when further improving the welding performance, the changes in voltage caused by the resistance and inductance between the power supply, which includes the power cable, and the electrode cannot be ignored.

When the output voltage detected in the power supply is reflected on the control of the inverter circuit, a value deviated from the true voltage at the electrode tip is reflected on the control of the inverter circuit. This hinders the production of a preferable arc and hinders further improvement of the welding performance.

The inventors of the present invention have also developed a DC reactor having an oversaturated characteristic. More specifically, in a high current range, to prevent influence on waveform control, which is executed to smooth current, the required minimum inductance of the DC reactor is constant. In a low current range, which is less than or equal to a predetermined current, the DC reactor has an inductance that gradually increases as

the current decreases to prevent arc interruptions. When using such a DC reactor, it is desirable that the electrode tip voltage be accurately detected.

It is an object of the present invention to provide a welding power supply that accurately detects the electrode tip voltage used for control and contributes to further improvement of the welding performance.

One aspect of the present invention is a welding power supply including an inverter circuit that converts DC power to high frequency AC power. A welding transformer performs voltage adjustment on the high frequency AC power. A DC converting means includes a DC reactor that generates DC output voltage suitable for welding from a secondary side AC power of the welding transformer. An arc producing means produces an arc to weld a welding subject by supplying the generated output power to an electrode. A detecting means detects an output current and an output voltage when the output power is generated. A controlling means calculates a voltage at a tip of the electrode based on the detected output current and output voltage and controls the inverter circuit based on the calculated tip voltage. The DC reactor includes a first characteristic, in which an inductance is constant in a high current range, and a second characteristic, in which the inductance increase as the current decreases in a low current range. A resistance calculating means calculates a total resistance in a path from the welding power supply to the electrode tip based on the output voltage when the inverter circuit controls the output current at a predetermined current in a state in which the electrode and the welding subject is short circuited. An inductance calculating means detects at least three inductances based on a current attenuation amount related to at least one value of the output current corresponding to a range of the first characteristic and a current attenuation amount related to at least two values of the output current corresponding to a range of the second characteristic of the DC reactor in a state in which the electrode and the welding subject is short circuited, and calculates a total inductance in the path from the welding power supply to the electrode tip from a function of at least three previously detected inductances. A tip voltage calculating means calculates the tip voltage of the electrode. A tip voltage correcting means corrects the tip voltage in accordance with a voltage change related to the total resistance and the total inductance in the path from the welding power supply and the electrode tip for the detected output voltage. The tip voltage calculating means is configured so that the number of detections of the inductance for the range of the second characteristic is more than the number of detections in the range of the first characteristic and the first characteristic is a normal characteristic and the second characteristic is an oversaturated characteristic.

Fig. 1 is a diagram showing the structure of a welding power supply according to one embodiment of the present invention;
Fig. 2 is a graph showing changes of the inductance in an oversaturated reactor and for the overall voltage change;
Fig. 3 is a graph used to calculate the resistance and inductance.

An arc welder according to one embodiment of the present invention will now be described with reference to the drawings.

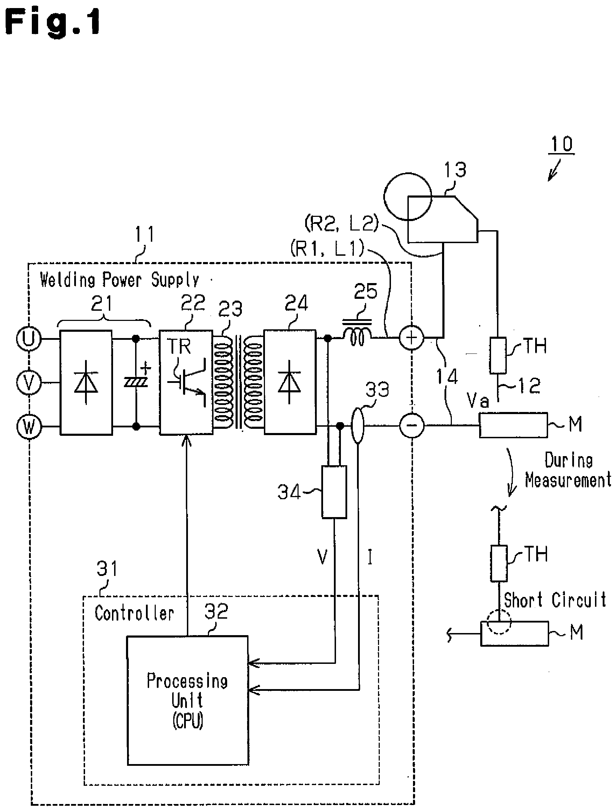

Fig. 1 shows a consumable electrode type arc welder 10. The arc welder 10 is provided with a welding power supply 11, which includes a positive output terminal and a negative output terminal, a wire electrode 12, which is connected to the positive output terminal, and a torch TH, which supports a wire electrode 12. The positive output terminal is connected to the wire electrode 12 by a wire feeder 13 and a power cable 14.

In a state in which a welding subject M is connected to the negative output terminal of the power supply 11 by the power cable 14, the power supply 11 generates DC output power, which is applied to the wire electrode 12 to perform arc welding. The wire electrode 12 is consumed during welding. Thus, the wire electrode 12 feeds the wire electrode 12 in accordance with the consumption.

The welding power supply 11 converts three-phase AC input power, which is supplied from a commercial power supply, into DC output power, which is suitable for welding. The welding power supply 11 is provided with a rectification smoothing circuit 21, which includes a diode bridge and a smoothing capacitor, an inverter circuit 22, which includes a bridge circuit formed by four switching elements TR such as IGBTs, a welding transformer 23, a rectification circuit 24, which includes a diode, a DC reactor 25, a controller 31, a current sensor 33, and a voltage sensor 34.

The rectification smoothing circuit 21 is supplied with the AC input power from the commercial power supply, Then, the rectification smoothing circuit 21 coverts the AC input power into DC power. The inverter circuit 22 converts the converted DC power to high frequency AC power. As mentioned above, the inverter circuit 22 undergoes PWM control, which is executed by the controller 31.

The welding transformer 23 converts the high frequency AC power generated by the inverter circuit 22 into secondary side AC power having a predetermined voltage. The rectification circuit 24 and the DC reactor 25 converts the secondary side AC power of the welding transformer 23 to DC output voltage suitable for arc welding.

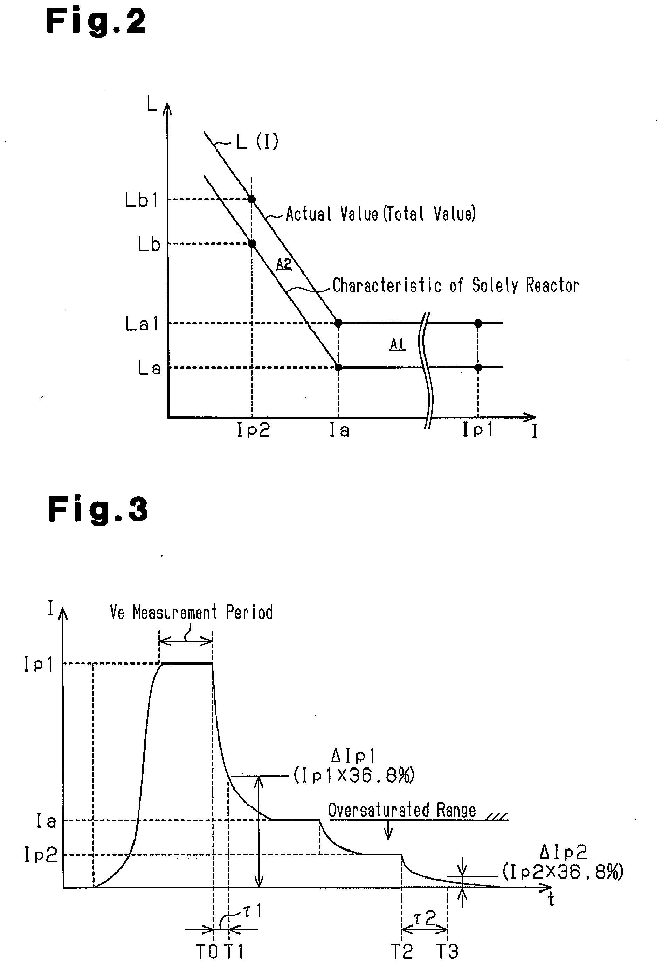

In the present embodiment, an oversaturated reactor, which has an oversaturated characteristic, is used as the DC reactor 25. As shown in Fig. 2, due to the DC reactor 25, in a high current range that is greater than a predetermined current Ia, the required minimum inductance La becomes constant. This range is referred to as a normal range A1 and includes current Ip1. In a low current range that is less than or equal to the predetermined current Ia, the inductance linearly increases as the current decreases. This range is referred to as an oversaturated range A2, in which the inductance Lb corresponds to current Ip2. When using the DC reactor 25, the inductance is small in the high current range. Thus, the influence on waveform control, which is executed to smooth the current, is small. In the low current range, the inductance increases and prevents arc interruptions. This generates a preferable DC output power throughout each current range.

Referring to Fig. 1, the controller 31 executes PWM control on the switching elements TR to maintain the present DC output power at a preferable value. In this state, the controller 31 detects the present output current I and output voltage V. The controller 31 then feeds back the detected output current I and output voltage V for PWM control.

The current sensor 33 is connected to a power line of the negative output terminal in the power supply 11. The controller 31 includes a processing unit 32 (CPU), which detects the output current I of the power supply 11 with the current sensor 33. The voltage sensor 34 is connected between power lines at the downstream side of the rectification circuit 24. The processing unit 32 detects the output voltage of the power supply 11 with the voltage sensor 34..The processing unit 32 calculates the duty of the PWM control based on the presently detected output current I and output voltage V and generates a PWM control signal. The processing unit 32 provides the PWM control signal to the inverter circuit 22.

It is preferable that the output voltage V used for PWM control be a tip voltage Va of the wire electrode 12 at which the arc is produced. However, direct detection of the tip voltage is difficult. Thus, the controller 31 obtains the tip voltage Va by correcting the presently detected output voltage V with the change in the voltage between the voltage sensor 34 and the electrode 12.

The change in the voltage between the voltage sensor 34 and the electrode includes the voltage change inside the power supply 11 (i.e., voltage change caused by the resistance R1 and the inductance L1 between the rectification circuit 24 and the output terminal) and the voltage change outside the power supply 11 (i.e., voltage changed caused by the resistance R2 and the inductance L2 between the output terminal and the tip of the electrode 12 via the power cable 14). The change in the voltage in the power supply 11 may be incorporated beforehand in the calculation of the tip voltage Va as a correction item unaffected by the usage state. The change in the output voltage of the power supply 11 differs depending on the length and laid out state (straight layout, wound layout, and number of windings) of the power cable 14. Thus, the change in the output voltage of the power supply 11 is greatly affected by the resistance R2, in particular, the inductance L2.

In a state in which a user has set the arc welder 10 at a welding location and laid out the power cable, the internal resistance R1 and inductance L1 are added to the external resistance R2 and inductance L2 to obtain the resistance R and inductance L, respectively. The controller 31 holds the total resistance R and the total inductance L.

In the present embodiment, the power supply 11 operates in a measurement mode to measure the total resistance R and the total inductance L. The controller 31 switches to the measurement mode when selected by a switch or the like. In the measurement mode, the controller 31 measures the total resistance R and the total inductance L in a state in which the tip of the wire electrode 12 is short-circuited with a welding subject M. The electrode 12 is not directly short-circuited with the welding subject M. The total resistance R and the total inductance L are measured in a state in which a distal portion of the torch TH (power supplying portion excluding wire), which supports the electrode 12, is short circuited with the welding subject M. In this case, a special short circuiting jig may be used. Further, a contact electrode may be used in lieu of the wire electrode 12 for short circuiting.

The measurement mode of the controller 31 will now be described.

Referring to Fig. 3, the controller 31 first activates the inverter circuit 22. This increases the output current I to the current Ip1. In the DC reactor 25 having the oversaturated characteristics, the current Ip1 is included in the normal range A1 in which the inductance L1 is constant. Referring to Fig. 2, the characteristics of the power cable 14 changes depending on the laid out state of the power cable 14. Thus, the total inductance L is offset from the constant inductance La to a constant inductance La1. The offset amount is taken into account when setting the normal region A1. An average voltage Ve is measured in the range in which the current Ip1 is held. Then, the total resistance R is calculated from equation (a).

$$R = Ve/Ip1 \quad (a)$$

At timing T0, the controller 31 deactivates the inverter circuit 22 and starts measuring time. At the same time, the controller 31 samples the output current I that continuously changes from timing T0. At timing T1, when the output current I reaches a current attenuation amount corresponding to a time constant, namely, current $\Delta$Ip1 (Ip2×36.8%), the time (time constant) $\tau$1 between timing T1 to timing T0 is obtained. The total inductance La1 (inductance La for solely the reactor 25) that changes in the normal range A1 is calculated from equation (b).

$$La1 = R \cdot \tau 1 (= Ve \cdot \tau 1/Ip1) \quad (b)$$

Then, the controller 31 activates the inverter circuit 22 again. This adjusts the output current I to the predetermined current Ip2 in the oversaturated range A2. Subsequent to the adjustment, at timing T2, the controller 31 deactivates the inverter circuit 22 again and starts measuring time. At the same time, the controller 31 samples the output current I that continuously changes from timing T2. At timing T3, when the output current I reaches a current attenuation amount corresponding to a time constant, namely, current $\Delta$Ip2 (Ip2×36.8%), the time (time constant) $\tau$2 between timing T3 to timing T2 is obtained. The total inductance Lb1 (inductance Lb for solely the reactor 25) that changes in the oversaturated range A2 is calculated from equation (c).

$$Lb1 = R \cdot \tau 2 (= Ve \cdot \tau 2/Ip2) \quad (c)$$

Then, referring to Fig. 2, the calculated total inductance La1 of the normal range A1 and the total inductance Lb1 of the oversaturated range A2 is linearly interpolated. This, obtains a function L(I) of the total inductance L, which includes a variable of the current. The controller 31 holds the function L(I) of the total inductance L obtained in this manner as the previously obtained resistance R. This completes the measurement mode.

During welding, the controller 31 calculates the tip voltage Va from the present output current I and the output voltage V using equation (d).

$$Va = V - L(I) \cdot dI/dt - RI \quad (d)$$

When the inverter circuit 22 is activated, the controller 31 outputs current Ip1=400 [A] for 10 [ms].

Then, the controller 31 deactivates the inverter circuit 22. When the average voltage Ve during this period is 4 [V], the total resistance R is calculated from equation (a) as shown below.

$$R=Ve/Ip1=4/400=0.01 \ [\Omega]$$

Current $\Delta Ip1$, which is the current attenuation amount corresponding to the time constant $\tau1$, is as shown below.

$$\Delta Ip1=400\times0.368=147 \ [A]$$

When the time constant $\tau1$ is 3 [ms] from when the inverter circuit 22 is deactivated to when the output current I reaches 147 [A] from 400 [A], the total inductance La1 is calculated from equation (b) as shown below.

$$La1=R\cdot\tau1=0.01\times3=0.03 \ [mH]$$

This obtains the total inductance La1, which includes the inductance La, solely for the current reactor 25 in the normal range A1. The current Ip1 is estimated beforehand from the specification of the used DC reactor 25 and required to be set at a value that does not reach the oversaturated range A2.

Then, the controller 31 activates the inverter circuit 22 again and outputs, for example, the current Ip2=20 [A] that corresponds to the minimum current of the arc welder 10 in the oversaturated range A2 for 10 [ms]. Subsequently, the controller 31 deactivates the inverter circuit 22. The current $\Delta Ip2$ at which the current Ip2 becomes the current attenuation amount corresponding to the time constant $\tau2$ is as shown below.

$$\Delta Ip2=20\times0.368=7 \ [A]$$

When the time constant $\tau2$ is 10 [ms] from when the inverter circuit 22 is deactivated to when the output current I reaches 7 [A] from 20 [A], the total inductance Lb1 is calculated from equation (c) as shown below.

$$Lb1=R\cdot\tau2=0.01\times10=0.1 \ [mH]$$

This obtains the total inductance Lb1, which includes the inductance Lb solely for the current reactor 25, in the oversaturated range A2.

Then, La1=0.03 [mH] and Lb1=0.1 [mH] are linearly interpolated. This obtains the function L(I) of the total inductance L. From function L(I) of the total inductance L and the previously obtained total resistance R, the present tip voltage Va can be calculated with equation (d). The specific numerical values in the foregoing description are used as examples and are not limited in any manner.

In this manner, the tip voltage Va can be accurately calculated even when the welding power supply 11 uses the DC reactor 25 that has oversaturated characteristics. Thus, the inverter circuit 22 is accurately controlled in accordance with the present tip voltage Va that is accurately calculated. Accordingly, the synergetic effect of the tip voltage Va being accurately calculated and the use of the reactor 25 having the oversaturated characteristics generates DC output power further suitable for arc welding throughout each current range.

The present embodiment has the advantages described below.

(1) In the measurement mode of the controller 31, when measuring the total resistance (internal inductance L1 + external resistance R2) and the total inductance L (internal inductance L1 + external inductance L2), the wire electrode 12 (including substituting electrode) is short circuited as described above. The total resistance R is calculated based on the output voltage V (average voltage Ve) when the inverter circuit 22 operates to set the output current I to the predetermined current Ip1. Further, the inductances La1 and Lb1 are detected when the output current I generated by the inverter circuit 22 is set as the two current values Ip1 and Ip2 respectively corresponding to the normal range A1 and oversaturated range A2 of the DC reactor 25. During welding, the controller 31 corrects changes in the voltage related to the total resistance R and the total inductance L for the detected output voltage to calculate the tip voltage Va. Thus, even when using the DC reactor 25, which includes the normal range A1 and the oversaturated range A1, the controller 31 can accurately calculate the total resistance R, in particular, the total inductance L, in the path to the tip of the electrode 12. Accordingly, the synergetic effect of the tip voltage Va being accurately calculated and the use of the reactor 25 having the oversaturated characteristics generates output power that is further suitable for arc welding throughout each current range. This contributes to further improvement in the welding performance.

(2) The function L(I) of the total inductance L is calculated from the two inductances La1 and Lb1, which are detected at the two current values Ip1 and Ip2 respectively corresponding to the normal region A1 and the oversaturated region A2 of the DC reactor 25. The detections of the inductances La1 and Lb1 are decreased. This shortens the detection time, the time required to calculate the total inductance L, and the time required to calculate the tip voltage Va. Further, the load is reduced for such calculations.

(3) When the output current I is set at the current Ip1 to detect the inductance La1 corresponding to the normal range A1, the total resistance R is calculated from the present output voltage V (average voltage Ve). This allows for detection of the total resistance R when the output current I is set to the current Ip1 to detect the inductance la 1 corresponding to the normal range A1. Thus, the output current I is set a fewer number of times. In other words, the inverter circuit 22 is required to be activated whenever the output current I is set. Thus, the number of times the inverter circuit 22 is activated is decreased, and the tip voltage Va is efficiently calculated within a short period of time.

It should be apparent to those skilled in the art that the present invention may be embodied in many other specific forms without departing from the scope of the appended claims. Particularly, it should be understood that the present invention may be embodied in the following forms.

In the above embodiment, the total inductance L is calculated from the two inductances La1 and Lb1 for the two currents Ip1 and Ipr corresponding to the normal range A1 and oversaturated range A1 of the DC reactor 25, respectively. However, according to the present invention three or more inductances are detected instead. Further, two or more inductances may be detected in each of the regions A1 and A2. Moreover, the number of detections of the inductance may be increased for just the oversaturated region A2, in which the inductance values changes as the current changes.

In the above embodiment, when the output current I is set to the current Ip1 to detect the inductance La1 corresponding to the normal range A1, the total resistance R is the present output voltage V (average voltage Ve). However, the output current I may be separately set to calculate the total resistance R. Further, the total resistance R is detected before the inductance La1 is detected. However, the total resistance R may be detected between the detections of the inductances La1 and Lb1 or after detection of the inductance Lb1.

In the above embodiment, the power supply 11 is formed by the inverter circuit 22, the welding transformer 23, the DC converting means (rectification circuit 24 and DC reactor 25, and the like. However, the circuits may be changed as required.

**Claims**

1. A welding power supply (11) including
   an inverter circuit (22) that converts DC power to high frequency AC power,
   a welding transformer (23) that performs voltage adjustment on the high frequency AC power,
   a DC converting means (24,25) including a DC reactor (25) that generates DC output voltage suitable for welding from a secondary side AC power of the welding transformer (23),
   an arc producing means (12) for producing an arc to weld a welding subject (M) by supplying the generated output power to an electrode,
   a detecting means (33,34) for detecting an output current and an output voltage when the output power is generated, and
   a controlling means for calculating a voltage at a tip of the electrode based on the detected output current and output voltage and controlling the inverter circuit (22) based on the calculated tip voltage, the welding power supply (11) being **characterized in that**:

   the DC reactor (25) includes a first characteristic, in which an inductance is constant in a high current range, and a second characteristic, in which the inductance increase as the current decreases in a low current range;
   a resistance calculating means (31) for calculating a total resistance in a path from the welding power supply to the electrode tip based on the output voltage when the inverter circuit (22) controls the output current at a predetermined current in a state in which the electrode and the welding subject (M) is short circuited;
   an inductance calculating means (31) for detecting at least three inductances based on a current attenuation amount related to at least one value of the output current corresponding to a range of the first characteristic and a current attenuation amount related to at least two values of the output current corresponding to a range of the second characteristic of the DC reactor (25) in a state in which the electrode and the welding subject (M) is short circuited, and calculating a total inductance in the path from the welding power supply (11) to the electrode tip from a function of at least three previously detected inductances; and the first characteristic is a normal characteristic and the second characteristic is an oversaturated characteristic; a tip voltage calculating means (31) for calculating the tip voltage of the electrode;
   wherein the tip voltage calculating means (31) is configured so that the number of detections of the inductance for the range of the second characteristic is more than the number of detections of the inductance for the range of the first characteristic; and
   a tip voltage correcting means (31) for correcting the tip voltage in accordance with a voltage change related to the total resistance and the total inductance in the path from the welding power supply (11) and the electrode tip for the detected output voltage;

2. The welding power supply (11) according to claim 1, wherein the resistance calculating means (31) calculates the total resistance from a present value of the output voltage when setting the output current to a current in the range of the first characteristic to detect the inductance corresponding to the range of the first characteristic with the inductance calculating means (31).

**Patentansprüche**

1. Eine Schweißstromversorgung (11) umfassend eine Wechselrichterschaltung (22), die Gleichstromleistung in Hochfrequenz-Wechselstromleistung umwandelt,
einen Schweißtransformator (23), der eine Spannungseinstellung an der Hochfrequenz-Wechselstromleistung vornimmt,
eine Gleichstromumwandlungseinrichtung (24, 25) mit einer Gleichstromdrossel (25), die aus einer sekundärseitigen Wechselstromleistung des Schweißtransformators (23) eine zum Schweißen geeignete Ausgangsgleichspannung erzeugt,
eine Lichtbogenerzeugungseinrichtung (12) zum Erzeugen eines Lichtbogens zum Schweißen von einem Schweißobjekt (M) durch Zuführen der erzeugten Ausgangsleistung zu einer Elektrode,
eine Erfassungseinrichtung (33, 34) zum Erfassen eines Ausgangsstroms und einer Ausgangsspannung, wenn die Ausgangsleistung erzeugt wird, und
ein Steuermittel zum Berechnen einer Spitzenspannung an einer an der Spitze der Elektrode befindlichen Elektrodenspitze auf der Grundlage des erfassten Ausgangsstroms und der erfassten Ausgangsspannung und zum Steuern der Wechselrichterschaltung (22) auf der Grundlage der berechneten Spitzenspannung, wobei die Schweißstromversorgung (11) **dadurch gekennzeichnet ist, dass**
die Gleichstromdrossel (25) eine erste Kennlinie aufweist, in der eine Induktivität in einem hohen Strombereich im Wesentlichen konstant ist, und eine zweite Kennlinie, in der die Induktivität im Wesentlichen mit abnehmendem Strom in einem niedrigen Strombereich zunimmt;
eine Widerstandsberechnungseinrichtung (31) zum Berechnen eines Gesamtwiderstandes in einem Pfad von der Schweißstromversorgung zur Elektrodenspitze auf der Grundlage der Ausgangsspannung, wenn die Wechselrichterschaltung (22) den Ausgangsstrom bei einem vorbestimmten Strom in einem Zustand steuert, in dem die Elektrode und das Schweißobjekt (M) kurzgeschlossen sind;
eine Induktivitätsberechnungseinrichtung (31) zum Erfassen von mindestens drei Induktivitäten auf der Grundlage eines Stromdämpfungsbetrags, der sich auf mindestens einen Wert des Ausgangsstroms bezieht, der einem Bereich der ersten Kennlinie entspricht, und eines Stromdämpfungsbetrags, der sich auf mindestens zwei Werte des Ausgangsstroms bezieht, die einem Bereich der zweiten Kennlinie der Gleichstromdrossel (25) in einem Zustand entsprechen, in dem die Elektrode und das Schweißobjekt (M) kurzgeschlossen sind, und
zur Berechnung einer Gesamtinduktivität in dem Pfad von der Schweißstromversorgung (11) zur Elektrodenspitze entsprechend einer Funktion von mindestens drei zuvor ermittelten Induktivitäten; wobei
die erste Kennlinie eine normale Kennlinie darstellt und die zweite Kennlinie eine übersättigte Kennlinie darstellt;
eine Spitzenspannungs-Berechnungseinrichtung (31) zum Berechnen der Spitzenspannung der Elektrode;
wobei die Spitzenspannungs-Berechnungseinrichtung (31) so konfiguriert ist, dass die Anzahl der Erfassungen der Induktivität für den Bereich der zweiten Kennlinie größer ist als die Anzahl der Erfassungen der Induktivität für den Bereich der ersten Kennlinie, und
eine Spitzenspannungskorrektureinrichtung (31) zum Korrigieren der Spitzenspannung in Abhängigkeit von einer Spannungsänderung in Bezug auf den Gesamtwiderstand und die Gesamtinduktivität in dem Pfad von der Schweißstromversorgung (11) und der Elektrodenspitze für die erfasste Ausgangsspannung.

2. Schweißstromversorgung (11) nach Anspruch 1, wobei die Widerstandsberechnungseinrichtung (31) den Gesamtwiderstand aus einem gegenwärtigen Wert der Ausgangsspannung berechnet, wenn der Ausgangsstrom auf einen Strom im Bereich der ersten Kennlinie eingestellt wird, um die Induktivität entsprechend dem Bereich der ersten Kennlinie mit der Induktivitätsberechnungseinrichtung (31) zu erfassen.

**Revendications**

1. Une alimentation électrique pour le soudage (11) comprenant
un circuit onduleur (22) qui convertit le courant continu en courant alternatif à haute fréquence,
un transformateur de soudage (23) qui effectue le réglage de la tension sur le courant alternatif à haute fréquence,
un moyen de conversion du courant continu (24,25) comprenant un réacteur à courant continu (25) qui génère une tension de sortie continue adaptée au soudage à partir d'une alimentation en courant alternatif du côté secondaire du transformateur de soudage (23),
un moyen de production d'arc (12) pour produire un arc afin de souder un sujet de soudage (M) en fournissant la puissance de sortie générée à une électrode,

un moyen de détection (33,34) pour détecter un courant de sortie et une tension de sortie lorsque la puissance de sortie est générée, et

un moyen de commande pour calculer une tension à une pointe de l'électrode sur la base du courant de sortie et de la tension de sortie détectés et pour commander le circuit onduleur (22) sur la base de la tension de pointe calculée, l'alimentation électrique pour le soudage (11) étant **caractérisée en ce que** le réacteur à courant continu (25) comprend une première courbe caractéristique, dans laquelle une inductance est essentiellement constante dans une plage de courant élevé, et une deuxième courbe caractéristique, dans laquelle l'inductance essentiellement augmente lorsque le courant diminue dans une plage de courant faible ;

un moyen de calcul de résistance (31) pour calculer une résistance totale sur un trajet allant de l'alimentation électrique pour le soudage à la pointe de l'électrode sur la base de la tension de sortie lorsque le circuit onduleur (22) commande le courant de sortie à un courant prédéterminé dans un état où l'électrode et le sujet de soudage (M) sont en court-circuit ;

un moyen de calcul d'inductance (31) pour détecter au moins trois inductances sur la base d'une quantité d'atténuation de courant liée à au moins une valeur du courant de sortie correspondant à une plage de la première courbe caractéristique et une quantité d'atténuation de courant liée à au moins deux valeurs du courant de sortie correspondant à une plage de la deuxième courbe caractéristique du réacteur à courant continu (25) dans un état dans lequel l'électrode et le sujet de soudage (M) sont court-circuités, et

calcul d'une inductance totale dans le trajet entre l'alimentation électrique pour le soudage (11) et la pointe de l'électrode à partir d'une fonction d'au moins trois inductances détectées précédemment;

la première courbe caractéristique est une courbe caractéristique normale et la seconde une courbe caractéristique sursaturée ;

un moyen de calcul de la tension de pointe (31) pour calculer la tension de pointe de l'électrode ;

dans lequel le moyen de calcul de la tension de pointe (31) est configuré de sorte que le nombre de détections de l'inductance pour la plage de la deuxième courbe caractéristique est supérieur au nombre de détections de l'inductance pour la plage de la première courbe caractéristique, et

un moyen de correction de la tension de la pointe (31) pour corriger la tension de la pointe en fonction d'une variation de tension liée à la résistance totale et à l'inductance totale sur le trajet entre l'alimentation électrique pour le soudage (11) et la pointe de l'électrode pour la tension de sortie détectée.

2. Alimentation électrique pour le soudage (11) selon la revendication 1, dans laquelle le moyen de calcul de résistance (31) calcule la résistance totale à partir d'une valeur actuelle de la tension de sortie lors du réglage du courant de sortie à un courant dans la plage de la première courbe caractéristique pour détecter l'inductance correspondant à la plage de la première courbe caractéristique avec le moyen de calcul d'inductance (31).

# Fig.1

# Fig.2

# Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08103868 B
- US 6710297 B1
- JP 2006043764 A
- JP 8103868 A